# EUROPÄISCHE PATENTSCHRIFT

(11) **EP 3 800 783 B1**
(45) Veröffentlichungstag und Bekanntmachung des Hinweises auf die Patenterteilung: **07.02.2024**
(21) Anmeldenummer: 19201024.7
(22) Anmeldetag: 02.10.2019
(51) Int. Cl.: H02S 20/10, H02S 40/38, H02S 20/30

(54) **BELEUCHTUNGSVORRICHTUNG UND SOLARSTROMVERSORGUNG HIEFÜR**
LIGHTING DEVICE AND SOLAR POWER SUPPLY FOR SAME
DISPOSITIF D'ÉCLAIRAGE ET ALIMENTATION SOLAIRE CORRESPONDANTE

(43) Veröffentlichungstag der Anmeldung: 07.04.2021
(73) Patentinhaber: ICGH Investment and Consulting GmbH, 1150 Wien (AT)
(72) Erfinder: Hornbachner, Dieter, 1170 Wien (AT); Mulalic, Ismar, 1220 Wien (AT); Kovacic, Tim, 1040 Wien (AT)
(74) Vertreter: Weiser & Voith Patentanwälte Partnerschaft

(56) Entgegenhaltungen:
- WO-A1-2012/116696
- WO-A1-2016/018952
- WO-A2-2011/115419
- WO-A2-2013/093402
- US-A1- 2012 211 046
- US-A1- 2013 322 063
- US-A1- 2017 250 647

## Beschreibung

Die vorliegende Erfindung betrifft eine Solarstromversorgung für eine Leuchte, mit zumindest einem auf einen Mast aufschiebbaren rohrförmigen Solarmodul. Die Erfindung betrifft ferner eine Beleuchtungsvorrichtung mit einem Mast und einer von einer solchen Solarstromversorgung gespeisten Leuchte.

Rohrförmige Photovoltaik- bzw. Solarmodule sind aus dem Europäischen Patent EP 2 071 635 B1 derselben Anmelderin bekannt und haben den Vorteil, dass Licht von allen Seiten des Solarmoduls verwertet werden kann. Dies erübrigt auch eine spezielle Ausrichtung des Solarmoduls gegenüber der Sonne bei der Montage und im Betrieb; überdies kann durch diffuses licht von allen Seiten empfangen werden. Aufgrund seiner rohrförmigen Gestalt kann das Solarmodul koaxial auf dem Mast angeordnet werden, was besonders wenig Platz benötigt und besonders ästhetische Beleuchtungsvorrichtungen, z.B. zur Straßenbeleuchtung, ermöglicht.

US 2017/250647 offenbart eine Solarstromversorgungsvorrichtung mit einem rohrförmigen Solarmodul für eine Leuchte.

Derzeit werden zur Montage der Solarmodule Masten mit angeschweißten Stützringen verwendet, auf welchen die auf den Mast aufgeschobenen Solarmodule abgestützt werden. Dies erfordert speziell vorkonfektionierte Masten. Dabei muss auch der Durchmesser des Mastes an den Innendurchmesser des Solarmoduls angepasst sein, weil dieses zur Verankerung möglichst spielfrei am Mast anliegen soll. Dafür sind insbesondere industriell standardisierte Masten ungeeignet, denn diese sind geringfügig konisch. Darüber hinaus sind Verkabelungen im Mast zu führen, was entsprechend vorgefertigte Durchlässe und Kanäle im Mast erfordert. Bislang werden daher für die Montage von rohrförmigen Solarmodulen eigens dafür gefertigte zylindrische und mit Durchlässen und Kanälen vorkonfektionierte Masten benötigt, was die Kosten erhöht.

Die Erfindung setzt sich zum Ziel, eine mit rohrförmigen Solarmodulen aufgebaute Solarstromversorgung für Leuchten zu schaffen, welche auf besonders einfache Weise und unter Verwendung kostengünstiger, standardisierter, gegebenenfalls auch konischer Masten montierbar ist.

Diese Ziel wird mit einer Solarstromversorgung der einleitend genannten Art erreicht, welche sich gemäß der Erfindung durch eine auf die Mastspitze aufsetzbare Krone auszeichnet, von welcher das Solarmodul abgehängt ist, wobei das Solarmodul in seinem Inneren zumindest ein Paar elastisch auseinanderspreizbarer Federelemente enthält, zwischen denen der Mast hindurchführbar ist.

Die erfindungsgemäße Montagelösung verlangt keinerlei spezielle Abmessungen oder Konfigurationen des Mastes mit Ausnahme dessen, dass die Krone auf die Mastspitze aufsetzbar und der Mast durch das Solarmodul hindurchführbar ist. Solange der Innendurchmesser von Krone und Solarmodul ausreichend groß ist, dass er den Außendurchmesser der Mastspitze und des Mastes in diesem Bereich aufnehmen kann, kann jeder beliebige Mast verwendet werden, insbesondere auch ein kostengünstiger, industriell standardisierter, gegebenenfalls auch leicht konischer Mast. Spezielle Durchlässe oder Kanäle für Verkabelungen oder gar spezielle Stützplatten am Mast für die Solarmodule sind nicht erforderlich. Das Solarmodul hängt von der auf die Mastspitze aufgesetzten Krone herab, was die mechanischen Beanspruchungen des empfindlichen Solarmoduls minimiert, welches nicht mehr am Mast abgestützt bzw. auf diesem eingespannt ist, sondern gleichsam frei herabhängt. Die Federelemente bewirken dabei eine automatische Zentrierung des Solarmoduls auf dem Mast. Wenn der Mast ausreichendes Spiel im Solarmodul hat, z.B. einen Außendurchmesser von 60 mm und das Solarmodul einen Innendurchmesser von 120 mm, können von den Federelementen auch vorübergehende Auslenkungen des Mastes gegenüber dem Solarmodul, wie sie insbesondere bei hohen Windlasten auftreten können, aufgenommen und eine automatisch federnde Rückstellung in die zentrierte Lage des Solarmoduls erzielt werden. Allfällig notwendige Verkabelungen können zwischen Krone und abgehängtem Solarmodul und/oder im Ringraum zwischen Mast und Solarmodul bzw. Krone verlaufen, sodass keinerlei Kabel im Mast selbst geführt werden müssen. Im Ergebnis wird eine einfache, sichere und das Solarmodul schonende und kostengünstige Montage erreicht.

Bevorzugt trägt das Solarmodul zumindest zwei voneinander axial beabstandete Paare von Federelementen, was die automatische Rückstellung des Solarmoduls nach einer vorübergehenden Auslenkung durch Windlast in die zentrierte Lage am Mast verbessert.

Die Federelemente können grundsätzlich von jeder in der Technik bekannten Art sein, beispielsweise Tellerfedern, Blattfedern, federnd gelagerte Druckstücke od.dgl. Besonders günstig ist es, wenn jedes Federelement eine Schraubenzugfeder ist, die das Innere des Solarmoduls im nicht-auseinandergespreizten Zustand im wesentlichen diametral quert, was eine sehr einfach Konstruktion ergibt.

Die beiden Schraubenzugfedern eines Federelementpaares können beispielsweise auf gleicher Höhe des Solarmoduls nebeneinanderliegend das Solarmodulinnere queren oder auf unterschiedlichen Höhen des Solarmoduls übereinanderliegen. In beiden Fällen können sie beim Einführen des Mastes in das Solarmodul bzw. Aufschieben des Solarmoduls auf den Mast vom Mast einfach auseinandergezwängt bzw. -gespreizt werden, um ihn federnd zwischen sich zu zentrieren.

In einer besonders vorteilhaften Ausführungsform der Erfindung ist das Solarmodul beweglich mit der Krone verbunden. Dies schützt das empfindliche Solarmodul vor Beschädigungen bei starken Windlasten. Beispielsweise kann ein 16 m hoher Mast bei Windgeschwindigkeiten von über 160 km/h an seiner Spitze um bis zu ± 1 m auslenken. Die bewegliche Lagerung des Solarmoduls an der Krone in Verbindung mit der federnden Abstützung des Solarmoduls am Mast gestattet es, derartige Bewegungen über die Federelemente aufzunehmen, ohne dass dabei das Solarmodul am Mast anschlägt.

Eine bevorzugte Ausgestaltung dieser beweglichen Lagerung besteht darin, dass zwischen Solarmodul und Krone ein axialer Spalt ist, wobei die beiden Teile Solarmodul und Krone durch zumindest zwei über ihren Umfang verteilte Stifte verbunden sind, welche an zumindest einem der beiden Teile mit axialem Spiel montiert sind. Dies erlaubt eine sehr einfach, bewegliche Lagerung des Solarmoduls an der Krone, bei welcher sich das Solarmodul gegenüber der Krone unter Ausnützung des genannten axialen Spiels verkippen kann, um eine Krümmung des Mastes bei seiner Auslenkung aufzunehmen. Der Spalt kann dabei gleichzeitig zur Ventilation und damit Kühlung des Solarmoduls im Inneren dienen.

Besonders günstig es, wenn jeder Stift an einem der beiden Teile fest und mit einem verbreiterten Kopf in einer Bajonettnut des anderen Teils lösbar und mit axialem Spiel verriegelbar ist. Dadurch können die beiden Teile Solarmodul und Krone bei der Montage einfach durch Einführen der Stiftköpfe in die Bajonettnuten miteinander verbunden werden und sind dann mit axialem Spiel gehalten, um die genannten Bewegungen zuzulassen.

In einer weiteren vorteilhaften Ausführungsform der Erfindung ist von dem genannten Solarmodul ein weiteres, gleichartiges Solarmodul - bevorzugt beweglich - abgehängt. An letzterem kann wiederum noch ein gleichartiges Solarmodul - wiederum bevorzugt beweglich - abgehängt sein, und so weiter und so fort. Die erfindungsgemäße Solarstromversorgung hat damit die Form einer aufeinanderfolgenden Kette von voneinander abgehängten Solarmodulen, wobei das oberste Solarmodul von der auf die Mastspitze aufgesetzten Krone abgehängt ist. Die gesamte Kette von Solarmodule kann dann - bei entsprechender beweglicher Abhängung der Solarmodule untereinander - Auslenkbewegungen des Mastes bei starken Windlasten folgen, ohne dass die Solarmodule Beschädigungen erfahren.

Auch für die bewegliche Lagerung der Solarmodule untereinander kann bevorzugt wieder ein axialer Spalt zwischen den Solarmodulen eingerichtet werden, und die Solarmodule werden durch zumindest zwei über ihren Umfang verteilte Stifte miteinander verbunden, welche an zumindest einem der beiden Solarmodule mit axialem Spiel montiert sind. Bevorzugt ist dabei wieder jeder Stift am einen Solarmodul fest montiert und mit einem verbreiterten Kopf in einer Bajonettnut des anderen Solarmoduls lösbar und mit axialem Spiel verriegelbar. Auch dieser Spalt kann zur Ventilation und Kühlung der Solarmodule dienen.

Gemäß einem weiteren bevorzugten Merkmal der Erfindung kann jedes Solarmodul einen rohrförmigen transparenten Körper mit Photovoltaikelementen an seiner Innenseite aufweisen, wobei der Körper zwischen zwei Stirnringen gehalten ist, die über im Inneren des Solarmoduls verlaufende Stäbe miteinander verbunden sind. Die Stirnringe mit den Stäben nehmen die strukturellen Lasten der Abhängung der Solarmodule auf, sodass der Glaskörper und die Photovoltaikelemente vor übermäßigen Beanspruchungen geschützt sind.

Optional kann auch die Krone an ihrem unteren Ende einen solchen Stirnring tragen. Die Stirnringe können auch dazu verwendet werden, die genannten Stifte daran zu montieren, insbesondere mittels der Bajonettnuten, die in den Stirnringen ausgebildet sein können.

In einer weiteren vorteilhaften Ausgestaltung der Erfindung hat die Krone einen Innenabsatz zur Abstützung auf der Oberseite der Mastspitze und ist mittels über ihren Innenumfang verteilter, gegen die Mastspitze zur Anlage bringbarer Justierschrauben koaxial zum Mast ausrichtbar. Die Krone balanciert damit gleichsam auf der Mastspitze und wird durch die Justierschrauben zentriert und fixiert.

Die von der Solarstromversorgung gespeiste Leuchte kann sowohl an der Krone als auch an einem der Solarmodule, beispielsweise am unteren Ende des untersten Solarmoduls, montiert sein. In einer bevorzugten Ausführungsform trägt die Krone zumindest einen auskragenden Arm, bevorzugt zwei diametral auskragende Arme, zur Montage jeweils einer Leuchte, um einen möglichst großen Leuchtbereich zu erzielen. Dabei kann bevorzugt jeder Arm winkelverstellbar an der Krone gelagert sein, um den Leuchtbereich auszurichten.

In einem weiteren Aspekt schafft die Erfindung eine Beleuchtungsvorrichtung mit einem Mast und einer Solarstromversorgung der hier vorgestellten Art, deren Krone auf die Mastspitze aufgesetzt und durch deren auseinandergespreizte Federelemente der Mast hindurchgeführt ist. Die Beleuchtungsvorrichtung hat zumindest eine von der Solarstromversorgung getragene und von dieser elektrisch gespeiste Leuchte.

Die Erfindung wird nachstehend anhand von in den beigeschlossenen Zeichnungen dargestellten Ausführungsbeispielen näher erläutert. In den Zeichnungen zeigen:
Fig. 1 die Beleuchtungsvorrichtung der Erfindung in einer Perspektivansicht;
Fig. 2 einen Ausschnitt aus dem oberen Teil der Beleuchtungsvorrichtung von Fig. 1 in einer teilweise aufgebrochenen Perspektivansicht;
Fig. 3 einen Ausschnitt aus dem mittleren Teil der Beleuchtungsvorrichtung von Fig. 1 in einer teilweise aufgebrochenen Seitenansicht;
die Fig. 4a und 4b jeweils einen Querschnitt durch die Beleuchtungsvorrichtung von Fig. 1 auf Höhe eines Federelementpaares einmal mit Federelementen im Ruhezustand (Fig. 4a) und einmal mit auseinandergespreizten Federelementen (Fig. 4b); und
die Fig. 5 und 6 zwei alternative Ausführungsformen der Krone der Beleuchtungsvorrichtung von Fig. 1 jeweils in einer teilweise aufgebrochenen Perspektivansicht.

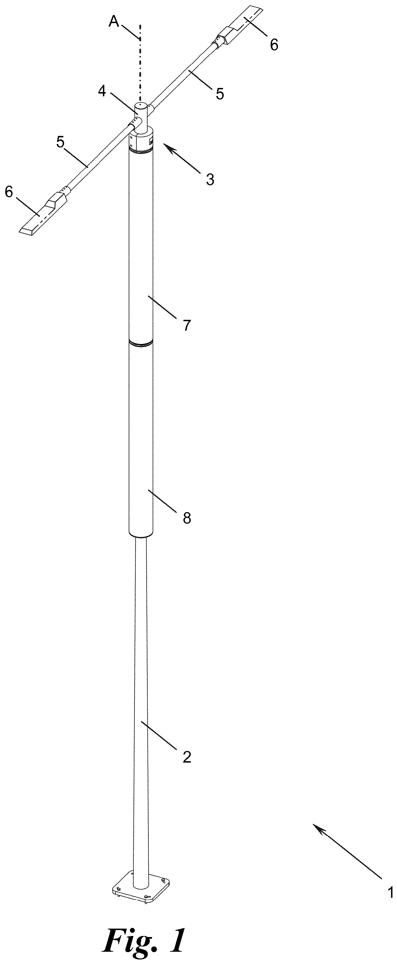

In Fig. 1 ist eine Beleuchtungsvorrichtung 1 für den öffentlichen Raum, z.B. eine Straße, mit einem (nur ausschnittsweise dargestellten) Mast 2 gezeigt. Auf die Spitze 3 des Mastes 2 ist eine etwa ring-, hut- oder topfförmige Krone 4 aufgesetzt, wie später noch näher erläutert wird. Die Krone 4 trägt einen oder mehrere (hier: zwei diametral auskragende) Arme 5, an denen jeweils eine Leuchte 6 montiert ist.

Auf den Mast 2 etwa koaxial aufgeschoben sind zwei im wesentlichen rohrförmige Solarmodule 7, 8, wobei das obere Solarmodul 7 von der Krone 4 und das untere Solarmodul 8 vom oberen Solarmodul 7 abgehängt ist. Der Mast 2 und die Solarmodule 7, 8 haben eine gemeinsame Längsachse A, auch wenn dies nicht zwingend ist. Die Solarmodule 7, 8 versorgen die Leuchten 6 mit elektrischem Strom über Kabel (nicht gezeigt), die im Inneren der Solarmodule 7, 8, der Krone 4 und der Arme 5 verlaufen.

Unter dem Begriff "rohrförmig" wird in der vorliegenden Beschreibung ein Rohr mit beliebigem Querschnitt verstanden, sei es mit kreisförmigem, ovalem, rechteckigem, quadratischem, dreieckigem oder beliebig polygonalem Querschnitt. Bevorzugt - wenn auch nicht zwingend - haben die Krone 4 und das bzw. die darunter abgehängten Solarmodule 7, 8 denselben Querschnitt.

Eine elektrische Steuerung und eine oder mehrere Pufferbatterien bzw. Akkumulatoren können im Inneren der Solarmodule 7, 8, des Mastes 2 und/oder einem (nicht gezeigten) externen Schaltkasten angeordnet und an die elektrischen Kabel angeschlossen sein, um den Solarstrom der Solarmodule 7, 8 für die Leuchten 6 zu puffern bzw. zu bevorraten. Die Beleuchtungsvorrichtung 1 braucht demgemäß nicht an das öffentliche Stromnetz angeschlossen zu werden, d.h. kann autark mit Sonnenlicht betrieben werden.

In dem gezeigten Beispiel hat die Beleuchtungsvorrichtung 1 zwei gleichartige Solarmodule 7, 8. Es versteht sich, dass auch nur ein oder mehr als zwei Solarmodule 7, 8 vorgesehen werden können, die jeweils aufeinanderfolgend voneinander abgehängt sind, und die zwei oder mehr Solarmodule 7, 8 auch unterschiedlich sein können.

In einer beispielhaften Ausführungsform hat der Mast 2 eine Höhe von 4 - 20 m über Grund, z.B. 8 m, und die axiale Länge eines Solarmoduls 7, 8 beträgt 1,0 - 4 m, z.B. ca. 2 m. Der Mast 2 ist geringfügig konisch und nach oben verjüngt und hat in jenem Bereich, in welchem die Solarmodule 7, 8 montiert sind, einen Außendurchmesser von z.B. 60 - 90 mm, und die Solarmodule 7, 8 haben einen Innendurchmesser von z.B. 100 - 150 mm.

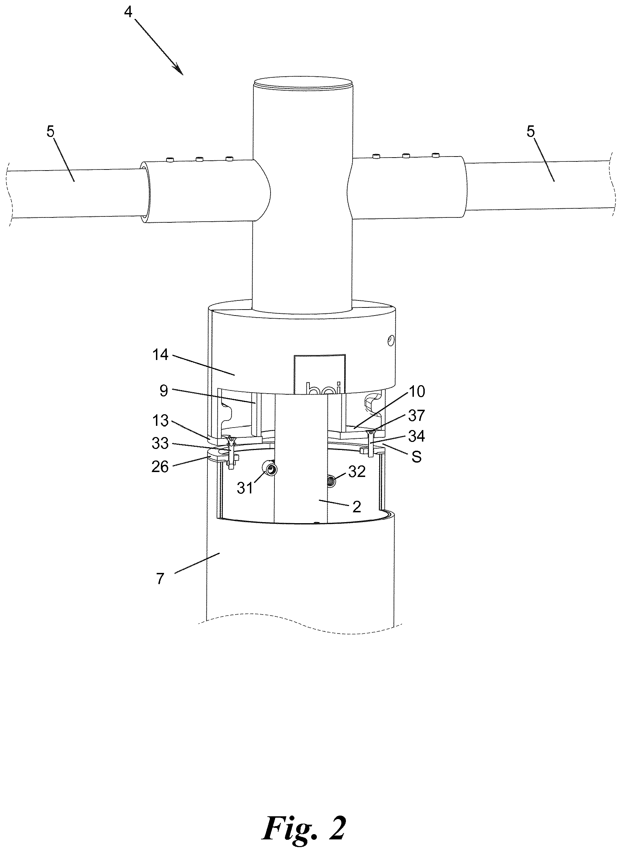

Unter Bezugnahme auf die Fig. 2, 5 und 6 hat die Krone 4 einen etwa rohrförmigen Grundkörper 9 mit einem Innenabsatz 10, welcher sich auf der Oberseite der Mastspitze 3 des Mastes 2 abstützt und die Mastspitze 3 mit radialem Spiel umgibt. Beispielsweise ist der Innendurchmesser des Grundkörpers 9 etwa 100 mm und der Außendurchmesser der Mastspitze 3 etwa 60 mm. Grundkörper 9 und Innenabsatz 10 können auch als eine Art Hut bzw. umgekehrter Topf mit einem Loch 11 betrachtet werden, der auf die Mastspitze 3 aufgesetzt wird. Das Loch 11 kann auch entfallen, d.h. der Innenabsatz 10 durch eine Platte gebildet sein.

Mithilfe von mehreren, über seinen Innenumfang verteilten, bevorzugt auf zwei verschiedenen Höhen angeordneten Justierschrauben 12 kann der Grundkörper 9 koaxial zum Mast 2 ausgerichtet werden. Die Justierschrauben 12 werden dann soweit eingeschraubt, dass sie am Außenumfang der Mastspitze 3 anliegen und diese im Grundkörper 9 zentrieren.

An seinem unteren Ende trägt der Grundköper 9 der Krone 4 einen Stirnring 13 zur Abhängung des obersten Solarmoduls 7, wie später noch im Detail beschrieben. Der Stirnring 13 dient gleichzeitig zur Abstützung einer Abdeckkappe 14, welche nicht nur die Justierschrauben 12 abdeckt, sondern auch einen Ringraum zwischen Abdeckkappe 14 und Grundkörper 9 schafft, der zur Führung von Kabeln durch eine Öffnung 15 im Stirnring 13 und eine seitliche Öffnung 16 im Grundkörper 9 und von dort in die Arme 5 dient.

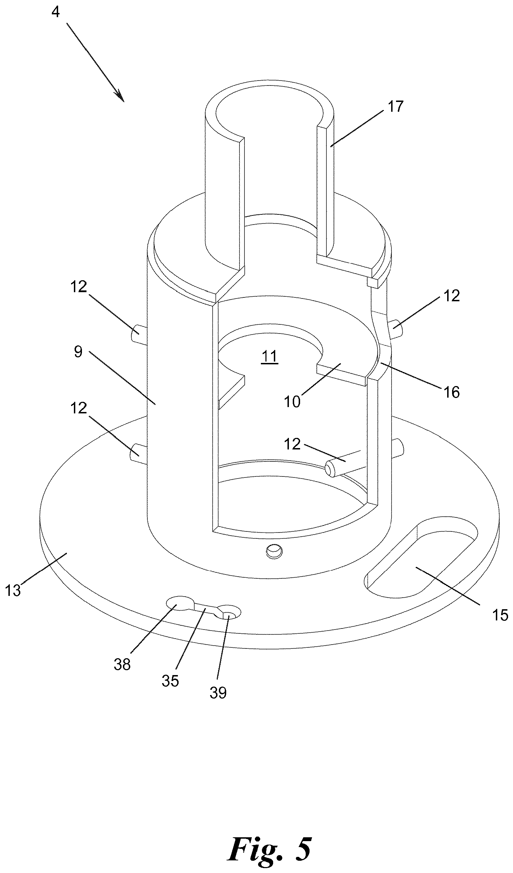

In der Ausführungsform von Fig. 2 sind die Arme 5 direkt mit dem oberen Ende des Grundkörpers 9 der Krone 4 verschraubt. Bei der Ausführungsform von Fig. 5 ist das obere Ende des Grundkörpers 9 als ein Stutzen 17 ausgebildet, auf dem ein oder mehrere standardisierte Kragarme 5 mit Leuchten 6 montiert werden können.

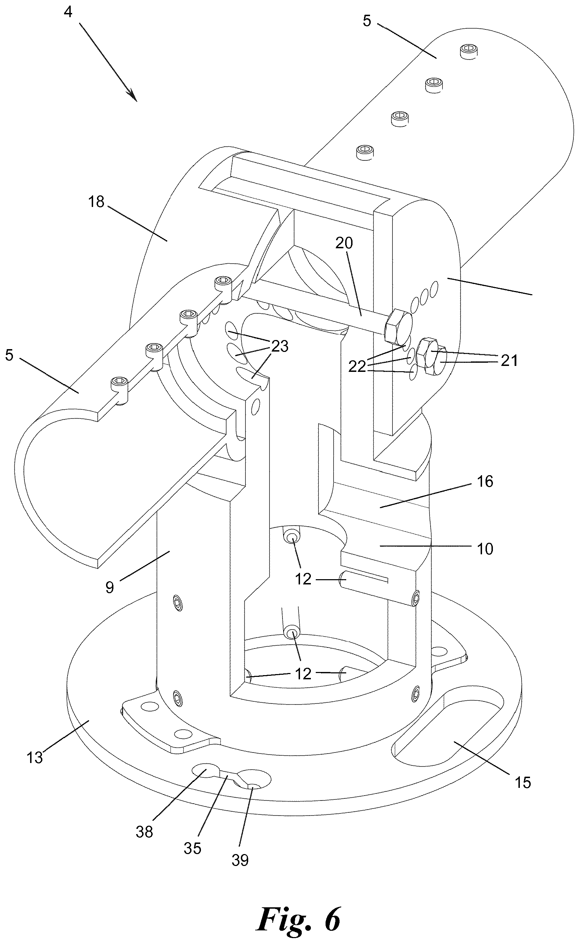

Bei der Ausführungsform von Fig. 6 sind die Arme 5 winkelverstellbar an der Krone 4 gelagert. Dazu ist jeder Arm 5 mit einer Scheibe bzw. Schale 18, 19 ausgestattet, die auf einer gemeinsamen, die Krone 4 durchsetzenden Welle 20 gelagert sind. Mithilfe von Steckstiften 21, welche wahlweise in unterschiedliche Bohrungen 22 in den Schalen 18, 19 und in entsprechend damit in Fluchtung bringbare Gegenbohrungen 23 im Grundköper 9 der Krone 4 gesteckt werden können, können die Arme 5 in unterschiedlichen Winkelstellungen gegenüber der Krone 4 arretiert werden.

Gemäß den Fig. 2 - 4 hat jedes Solarmodul 7, 8 einen rohrförmigen Körper 24 aus transparentem Material, z.B. Glas oder Kunststoff, welcher an seiner Innenseite mit Photovoltaikelementen 25 ausgestattet ist und diese vor Umwelteinflüssen schützt. Die Photovoltaikelemente 25 können beispielsweise in Form einer Vielzahl kleiner Plättchen sein, die untereinander verdrahtet sind und die Innenseite des Körpers 25 matrixartig auskleiden. Alternativ können die Photovoltaikelemente 25 an den Innenumfang des Körpers 25 angepasst gekrümmt sein, beispielsweise in Form eines rohrförmigen mehrlagigen Verbundelements, wie es in dem genannten Patent EP 2 071 635 B1 derselben Anmelderin beschrieben ist.

Auch ist es möglich, dass jedes Solarmodul 7, 8 aus einem oder mehreren flexiblen, zu einem Rohr gewickelten bzw. zusammengefalteten Photovoltaikelement(en) gebildet ist, beispielsweise aus flexiblen Dünnschicht-Photovoltaikmodulen. In weiteren Varianten kann jedes Solarmodul 7, 8 z.B. aus einzelnen in Axialrichtung des Solarmoduls verlaufenden Photovoltaikstreifen zusammengesetzt sein. Beispielsweise könnten starre, plattenförmige, längliche Photovoltaikelemente 25 direkt die Seiten eines rohrförmigen Solarmoduls 7, 8 mit polygonalem Querschnitt bilden, z.B. mit dreieckigem, viereckigem, hexagonalem oder oktagonalem Querschnitt, u.zw. optional auch ohne schützenden transparenten Körper 24.

Im vorliegenden Beispiel ist der transparente Körper 24 mitsamt den an seiner Innenseite angebrachten Photovoltaikelementen 25 zwischen zwei Stirnringen 26, 27 gehalten, die ihrerseits über im Inneren des Solarmoduls 7, 8 verlaufende Stäbe 29 miteinander verbunden sind. Beispielsweise sind zwei oder mehr über den Umfang des Solarmoduls 7, 8 verteilte Stäbe 29 vorgesehen. Die Stäbe 29 stellen gemeinsam mit den Tragringen 26, 27 die mechanische Tragstruktur des Solarmoduls 7, 8 dar, sodass keine Zug-, Druck- oder Querkräfte auf den Körper 24 mit den empfindlichen Photovoltaikelementen 25 ausgeübt werden, sei es durch die Abhängung der Solarmodule 7, 8 oder Windlasten im Betrieb. Zwischen jedem Tragring 26, 27 und dem von ihm gehaltenen transparenten Körper 24 kann jeweils eine elastische Dichtung 26', 27' vorgesehen sein, um unterschiedliche Wärmeausdehnungskoeffizienten der Stäbe 29 einerseits und des Körpers 24 bzw. der Photovoltaikelemente 25 anderseits aufzunehmen.

Um Bewegungen des Mastes 2 bei Windangriff aufzunehmen, ohne dass die Solarmodule 7, 8, insbesondere die empfindlichen transparenten Körper 24 und Photovoltaikelemente 25, Schaden nehmen, sind die Solarmodule 7, 8 untereinander und/oder das oberste Solarmodul 7 mit der Krone 4 beweglich verbunden. Die bewegliche Verbindung kann von jeder in der Technik bekannten Art sein, z.B. Seile, Drähte, Ketten, Scharniere, Gelenke usw. In den Fig. 2, 3, 5 und 6 ist eine spezielle Art von beweglicher Verbindung zwischen Krone 4 und davon abgehängtem obersten Solarmodul 7 bzw. zwischen zwei voneinander abgehängten Solarmodulen 7, 8 gezeigt, die sich durch Einfachheit und schnelle Montage vor Ort auszeichnet. Es handelt sich dabei um eine Bajonettverbindung zwischen den jeweils einander zugewandten Stirnringen 13, 26, 27, d.h. zwischen dem unteren Stirnring 13 der Krone 4 und dem oberen Stirnring 26 des obersten Solarmoduls 7 bzw. zwischen dem unteren Stirnring 27 eines jeweils oberen Solarmoduls 7 und dem oberen Stirnring 26 eines jeweils unteren Solarmoduls 8.

Dazu weist jeweils einer der zwei beteiligten Stirnringe 4, 26 bzw. 27, 26 zumindest zwei über seinen Umfang verteilte, daran fest montierte Stifte 33, 34 und der jeweils andere der zwei beteiligten Stirnringe 26, 4 bzw. 26, 27 damit zusammenwirkende Bajonettnuten 35, 36 auf, in welchen die Stifte 33, 34 mit jeweils einem verbreiterten Kopf 37 bajonettartig, jedoch mit axialem Spiel, verriegelbar sind. Zwischen den jeweils an einer Bajonettverbindung beteiligten Stirnringen 4 und 26 bzw. 27 und 26 besteht dazu jeweils ein axialer Spalt S. Die Spalte S erlauben auch eine Belüftung der Solarmodule 7, 8 und/oder der Krone 3 zur Kühlung der darin aufgenommenen elektronischen Komponenten und der Photovoltaikelemente 25.

Die Köpfe 37 der Stifte 33, 34 werden beim Zusammenbau in axialer Richtung in verbreiterte Anfangsabschnitte 38 der Bajonettnuten 35, 36 eingeführt, und dann wird der eine Stirnring gegenüber dem anderen Stirnring um die Achse A verdreht, z.B. um 15°, wodurch die Stifte 33, 34 in den Bajonettnuten 35, 36 in Umfangsrichtung gleiten, bis sie am Ende von verengten Endabschnitten 39 der Bajonettnuten 35, 36 anschlagen. Aufgrund ihrer gegenüber den Endabschnitten 39 breiteren Köpfen 37 sind sie dort in Axialrichtung gehalten. Die Endabschnitte 39 der Bajonettnuten 35, 36 können auch in Axialrichtung geringfügig eingesenkt sein, um die Köpfe 37 dort gegenüber einem unbeabsichtigten Aufdrehen der Bajonettverbindung zu verrasten.

Beim Verkippen eines Teils der Bajonettverbindung gegenüber dem anderen, z.B. des Solarmoduls 7 gegenüber der Krone 4 oder des Solarmodus 8 gegenüber dem Solarmodul 7, kann sich (zumindest) jeweils ein Kopf 37 aus seiner Halte- bzw. Raststellung im Endabschnitt 39 bzw. dessen Einsenkung in axialer Richtung ausheben, d.h. die Verankerung des jeweiligen Stiftes 33, 34 hat dort axiales Spiel.

Wenn die Stifte 33, 34 durch Schrauben gebildet sind, können diese einfach durch Einschrauben in entsprechende Bohrungen im jeweils einen Stirnring 13, 26, 27 fest verankert werden, während ihr Schraubenkopf als Kopf 37 zur axialbeweglichen Verankerung am jeweils anderen Stirnring 13, 26, 27 dient.

Wie aus den Zeichnungen ersichtlich hat jedes Solarmodul 7, 8 einen Innendurchmesser bzw. eine lichte Weite, welche(r) wesentlich größer ist als dort der Außendurchmesser des hindurchgeführten Mastes 2. Der Mast 2 hat damit beträchtliches radiales Spiel im Solarmodul 7, 8, was der Aufnahme von Auslenkungen bzw. Verbiegungen des Mastes 2 bei Windangriff dient. Dadurch kann sich der Mast 2 bei starkem Windangriff verbiegen bzw. auslenken, ohne am Innenumfang des jeweiligen Solarmoduls 7, 8 anzuschlagen. Beispielsweise beträgt der Innendurchmesser, d.h. die lichte Weite, der Solarmodule 7, 8 etwa 100 - 150 mm, z.B. 120 mm, während der Außendurchmesser des hindurchgeführten Mastes 2 in diesem Bereich etwa 40 - 80 mm, z.B. 60 mm beträgt.

Um die Solarmodule 7, 8 in der Ruhestellung, d.h. ohne Windlast, auf dem Mast 2 für statische und auch ästhetische Zwecke zu zentrieren, ist jedes Solarmodul 7, 8 in seinem Inneren mit zumindest einem Paar 30 elastisch auseinanderspreizbarer Federelemente 31, 32 ausgestattet, zwischen denen der Mast 2 hindurchgeführt ist. Beispielsweise sind zumindest zwei Paare 30 pro Solarmodul 7, 8 vorgesehen, insbesondere zumindest je ein Paar 30 an den beiden Enden eines der Solarmodule 7, 8.

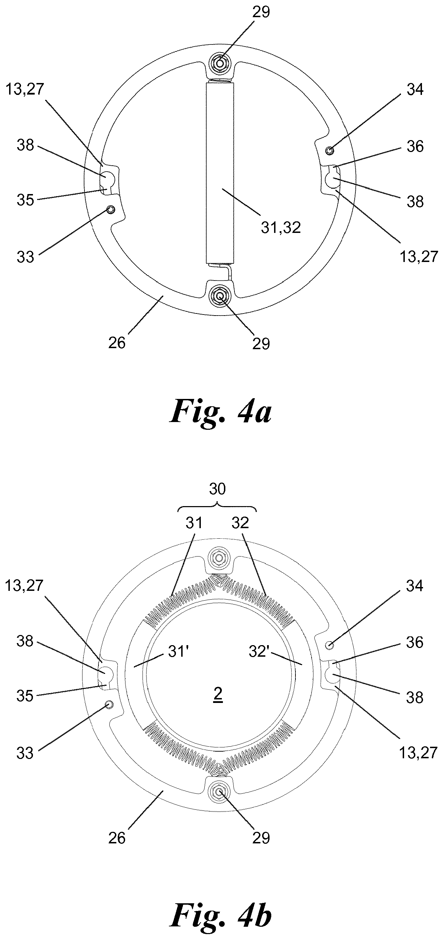

Fig. 4a zeigt die Federelemente 31, 32 im nicht-auseinandergespreizten Ruhezustand, in welchem sie das Innere des Solarmoduls 7, 8 im Wesentlichen diametral queren. Dabei ist jedes Federelement 31, 32 zwischen zwei einander am Innenumfang des Solarmoduls 7, 8 gegenüberliegenden Stäben 29 gespannt. Alternativ könnten auch die Stirnringe 26, 27 zur Lagerung der Federelemente 31, 32 verwendet werden.

Im gezeigten Beispiel ist jedes Federelement 31, 32 durch eine Schraubenzugfeder gebildet, die optional mit einer Gleithülse 31', 32' ummantelt sein kann. Die beiden Federelemente 31, 32 eines Paares 30 sind in Axialrichtung des Solarmoduls 7, 8 gesehen unmittelbar übereinander angeordnet. Es ist jedoch auch möglich, die Federelemente 31, 32 eines Paares 30 nebeneinander auf gleicher Höhe des Solarmoduls 7, 8 zu spannen, oder auch auf gänzlich unterschiedlichen Höhen mit gegenseitigem Axialabstand.

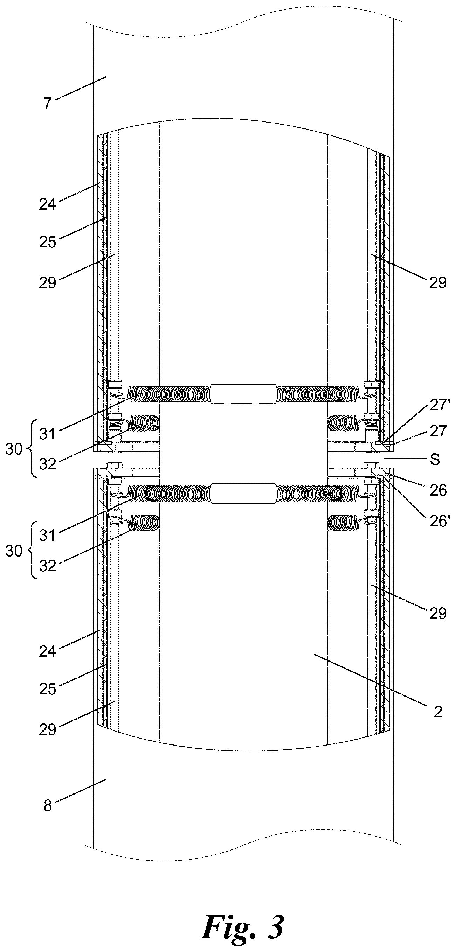

Wie in den Fig. 3 und 4b gezeigt, zwängt bzw. spreizt der hindurchgeführte Mast 2 die beiden Federelemente 31, 32 auseinander, wodurch sie aufgrund ihrer Zugfederkraft den Mast 2 im Solarmodul 7, 8 zentrieren.

Es versteht sich, dass die Federelemente 31, 32 von mehreren im Solarmodul 7, 8 übereinanderliegend angeordneten Paaren 30, z.B. den Paaren 30 an den beiden Enden des Solarmoduls 7, 8, das Innere des Solarmoduls 7, 8 auch in unterschiedlichen Diametralrichtungen queren können. Beispielsweise können zwei Paare 30 orthogonal zueinander das Innere des Solarmoduls 7, 8 queren, drei Paare 30 können winkelmäßig jeweils um 60° zueinander versetzt sein, vier Paare 30 können winkelmäßig jeweils um 45° zueinander versetzt sein, usw. Auch können die Federelemente 31, 32 innerhalb eines Paares 30 das Innere des Solarmoduls 7, 8 in unterschiedlichen Diametralrichtungen queren, sogar auf unterschiedlichen Höhen, denn auch dann werden sie durch den hindurchgeführten Mast 2 - in Axialrichtung gesehen - auseinandergespreizt. Dies ist insbesondere in jenen Ausführungsformen sinnvoll, in denen gleich drei, vier oder mehr Federelemente 31, 32 auf unterschiedlichen Höhen des Solarmoduls 7, 8 in unterschiedlichen Diametralrichtungen das Solarmodulinnere queren, was ebenfalls den Mast 2 im Solarmodul 7, 8 zentriert. In diesem Fall bilden dann jeweils zwei dieser auf unterschiedlichen Höhen und in unterschiedlichen Diametralrichtungen querenden Federelemente 31, 32 jeweils eines der genannten, elastisch auseinanderspreizbaren Federelementpaare 30.

Statt in Form von Schraubenzugfedern können die Federelemente 31, 32 auch auf andere Art ausgebildet sein, beispielsweise als Zugbänder aus elastischem Kunststoff oder als Druckstücke bzw. Klemmbacken, die federnd am Innenumfang des Solarmoduls 7, 8 gelagert sind, z.B. an den Stäben 3 und/oder den Stirnringen 26, 27.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Solarstromversorgungsvorrichtung für eine Leuchte, mit zumindest einem auf einen Mast (2) aufschiebbaren rohrförmigen Solarmodul (7, 8), **gekennzeichnet durch** eine auf die Mastspitze (3) aufsetzbare Krone (4), von welcher das Solarmodul (7, 8) abgehängt ist, wobei das Solarmodul (7, 8) in seinem Inneren zumindest ein Paar (30) elastisch auseinanderspreizbarer Federelemente (31, 32) enthält, zwischen denen der Mast (2) hindurchführbar ist.

2. Solarstromversorgungsvorrichtung nach Anspruch 1, **dadurch gekennzeichnet, dass** das Solarmodul (7, 8) zumindest zwei voneinander axial beabstandete Paare (30) von Federelementen (31, 32) trägt.

3. Solarstromversorgungsvorrichtung nach Anspruch 1 oder 2, **dadurch gekennzeichnet, dass** jedes Federelement (31, 32) eine Schraubenzugfeder ist, die das Innere des Solarmoduls (7, 8) im nicht-auseinandergespreizten Zustand im wesentlichen diametral quert.

4. Solarstromversorgungsvorrichtung nach einem der Ansprüche 1 bis 3, **dadurch gekennzeichnet, dass** das Solarmodul (7) beweglich mit der Krone (4) verbunden ist.

5. Solarstromversorgungsvorrichtung nach Anspruch 4, **dadurch gekennzeichnet, dass** zwischen Solarmodul (7) und Krone (4) ein axialer Spalt (S) ist, wobei die beiden Teile Solarmodul (7) und Krone (4) durch zumindest zwei über ihren Umfang verteilte Stifte (33, 34) verbunden sind, welche an zumindest einem der beiden Teile (7, 4) mit axialem Spiel montiert sind.

6. Solarstromversorgungsvorrichtung nach Anspruch 5, **dadurch gekennzeichnet, dass** jeder Stift (33, 34) an einem der beiden Teile (7, 8) fest und mit einem verbreiterten Kopf (37) in einer Bajonettnut (35, 36) des anderen Teils (8, 7) lösbar und mit axialem Spiel verriegelbar ist.

7. Solarstromversorgungsvorrichtung nach einem der Ansprüche 1 bis 6, **dadurch gekennzeichnet, dass** von dem genannten Solarmodul (7) ein weiteres, gleichartiges Solarmodul (8) bevorzugt beweglich abgehängt ist.

8. Solarstromversorgungsvorrichtung nach Anspruch 7, **dadurch gekennzeichnet, dass** zwischen den Solarmodulen (7, 8) ein axialer Spalt (S) ist, wobei die Solarmodule (7, 8) durch zumindest zwei über ihren Umfang verteilte Stifte (33, 34) verbunden sind, welche an zumindest einem der beiden Solarmodule (7, 8) mit axialem Spiel montiert sind.

9. Solarstromversorgungsvorrichtung nach Anspruch 8, **dadurch gekennzeichnet, dass** jeder Stift (33, 34) am einen Solarmodul (7) fest und mit einem verbreiterten Kopf (37) in einer Bajonettnut (35, 36) des anderen Solarmoduls (8) lösbar und mit axialem Spiel verriegelbar ist.

10. Solarstromversorgungsvorrichtung nach einem der Ansprüche 1 bis 9, **dadurch gekennzeichnet, dass** jedes Solarmodul (7, 8) einen rohrförmigen transparenten Körper (24) mit Photovoltaikelementen (25) an seiner Innenseite aufweist, wobei der Körper (24) zwischen zwei Stirnringen (26, 27) gehalten ist, die über im Inneren des Solarmoduls (7, 8) verlaufende Stäbe (29) miteinander verbunden sind.

11. Solarstromversorgungsvorrichtung nach einem der Ansprüche 1 bis 10, **dadurch gekennzeichnet, dass** auch die Krone (4) an ihrem unteren Ende einen Stirnring (13) trägt.

12. Solarstromversorgungsvorrichtung nach Anspruch 10 in Verbindung mit Anspruch 8 oder nach Anspruch 11 in Verbindung mit Anspruch 5, **dadurch gekennzeichnet, dass** die Stifte (33, 34) am jeweiligen Stirnring (13, 26, 27) montiert sind.

13. Solarstromversorgungsvorrichtung nach einem der Ansprüche 1 bis 12, **dadurch gekennzeichnet, dass** die Krone (4) einen Innenabsatz (10) zur Abstützung auf der Oberseite der Mastspitze (3) hat und mittels über ihren Innenumfang verteilter, gegen die Mastspitze (3) zur Anlage bringbarer Justierschrauben (12) koaxial zum Mast (2) ausrichtbar ist.

14. Solarstromversorgungsvorrichtung nach einem der Ansprüche 1 bis 13, **dadurch gekennzeichnet, dass** die Krone (4) zumindest einen auskragenden Arm (5), bevorzugt zwei diametral auskragende Arme (5), zur Montage jeweils einer Leuchte (6) trägt.

15. Solarstromversorgungsvorrichtung nach Anspruch 14, **dadurch gekennzeichnet, dass** jeder Arm (5) winkelverstellbar an der Krone (4) gelagert ist.

16. Beleuchtungsvorrichtung (1) mit einem Mast und einer Solarstromversorgungsvorrichtung nach einem der Ansprüche 1 bis 15, deren Krone (4) auf die Mastspitze (3) aufgesetzt und durch deren auseinandergespreizte Federelemente (31, 32) der Mast (2) hindurchgeführt ist, sowie zumindest einer von der Solarstromversorgungsvorrichtung getragenen und von dieser elektrisch gespeisten Leuchte (6).

## Claims

1. A solar power supply device for a light, comprising at least one tubular solar module (7, 8) that can be slid onto a mast (2), **characterised by** a crown (4) which can be fitted to the top of the mast (3) and from which the solar module (7, 8) is suspended, wherein the solar module (7, 8) contains in its interior at least one pair (30) of spring elements (31, 32) that can be resiliently spread apart, between which the mast (2) can be passed through.

2. The solar power supply device according to claim 1, **characterised in that** the solar module (7, 8) supports at least two axially spaced-apart pairs (30) of spring elements (31, 32) .

3. The solar power supply device according to claim 1 or 2, **characterised in that** each spring element (31, 32) is a tension coil spring, which substantially diametrically crosses the interior of the solar module (7, 8) when not spread apart.

4. The solar power supply device according to any one of claims 1 to 3, **characterised in that** the solar module (7) is movably connected to the crown (4).

5. The solar power supply device according to claim 4, **characterised in that** there is an axial gap (S) between the solar module (7) and the crown (4), the two parts, the solar module (7) and the crown (4), being connected by at least two pins (33, 34) which are distributed over their circumference and are mounted on at least one of the two parts (7, 4) with axial play.

6. The solar power supply device according to claim 5, **characterised in that** each pin (33, 34) is fixed to one of the two parts (7, 8) and can be locked in a bayonet groove (35, 36) in the other part (8, 7) detachably and with axial play by means of a widened head (37).

7. The solar power supply device according to any one of claims 1 to 6, **characterised in that** another, identical solar module (8) is suspended, preferably movably, from said solar module (7).

8. The solar power supply device according to claim 7, **characterised in that** there is an axial gap (S) between the solar modules (7, 8), the solar modules (7, 8) being connected by at least two pins (33, 34) which are distributed over their circumference and are mounted on at least one of the two solar modules (7, 8) with axial play.

9. The solar power supply device according to claim 8, **characterised in that** each pin (33, 34) is fixed to the one solar module (7) and can be locked in a bayonet groove (35, 36) in the other solar module (8) detachably and with axial play by means of a widened head (37).

10. The solar power supply device according to any one of claims 1 to 9, **characterised in that** each solar module (7, 8) comprises a tubular transparent body (24) having photovoltaic elements (25) on its inner face, the body (24) being retained between two end rings (26, 27), which are interconnected by rods (29) extending in the interior of the solar module (7, 8).

11. The solar power supply device according to any one of claims 1 to 10, **characterised in that** the crown (4) also supports an end ring (13) on its lower end.

12. The solar power supply device according to claim 10 in combination with claim 8 or according to claim 11 in combination with claim 5, **characterised in that** the pins (33, 34) are mounted on the respective end ring (13, 26, 27).

13. The solar power supply device according to any one of claims 1 to 12, **characterised in that** the crown (4) has an inner shoulder (10) for support on an upper face of the top of the mast (3) and can be aligned coaxially with the mast (2) by means of adjusting screws (12) which are distributed over its inner circumference and can be brought into contact with the top of the mast (3).

14. The solar power supply device according to any one of claims 1 to 13, **characterised in that** the crown (4) supports at least one projecting arm (5), preferably two diametrically projecting arms (5), each for mounting a light (6).

15. The solar power supply device according to claim 14, **characterised in that** each arm (5) is mounted on the crown (4) in an angularly adjustable manner.

16. A lighting device (1) comprising a mast and a solar power supply device according to any one of claims 1 to 15, the crown (4) of which is fitted to the top of the mast (3) and through the spread-apart spring elements (31, 32) of which the mast (2) is passed through, and at least one light (6) that is supported by the solar power supply device and is electrically powered thereby.

## Revendications

1. Dispositif d'alimentation en énergie solaire pour un éclairage avec au moins un module solaire (7, 8) en forme de tube pouvant être glissé sur un mât (2), **caractérisé par** une couronne (4) pouvant être posée sur la pointe du mât (3), par laquelle couronne le module solaire (7, 8) est suspendu, où le module solaire (7, 8) contient dans son intérieur au moins une paire (30) d'éléments de ressort (31, 32) pouvant s'écarter de manière élastique, entre lesquels le mât (2) peut être passé.

2. Dispositif d'alimentation en énergie solaire selon la revendication 1, **caractérisé en ce que** le module solaire (7, 8) porte au moins deux paires (30) d'éléments de ressort (31, 32) espacés axialement l'un de l'autre.

3. Dispositif d'alimentation en énergie solaire selon la revendication 1 ou 2, **caractérisé en ce que** chaque élément de ressort (31, 32) est un ressort de tension à boudin qui traverse essentiellement diamétralement l'intérieur du module solaire (7, 8) dans l'état non écarté.

4. Dispositif d'alimentation en énergie solaire selon l'une des revendications 1 à 3, **caractérisé en ce que** le module solaire (7) est relié de manière mobile avec la couronne (4).

5. Dispositif d'alimentation en énergie solaire selon la revendication 4, **caractérisé en ce qu'**il y a une fente (S) axiale entre le module solaire (7) et la couronne (4), où les deux parties module solaire (7) et couronne (4) sont reliées par au moins deux goupilles (33, 34) distribuées sur leurs périphéries, lesquelles sont montées sur au moins une des deux parties (7, 4) avec un jeu axial.

6. Dispositif d'alimentation en énergie solaire selon la revendication 5, **caractérisé en ce que** chaque goupille (33, 34) peut être verrouillée solidement à l'une des deux parties (7, 8) et de manière amovible avec un jeu axial avec une tête (37) élargie dans une rainure en baïonnette (35, 36) de l'autre partie (8, 7).

7. Dispositif d'alimentation en énergie solaire selon l'une des revendications 1 à 6, **caractérisé en ce qu'**un autre module solaire (8) du même type est suspendu, de préférence de manière mobile, par ledit module solaire (7).

8. Dispositif d'alimentation en énergie solaire selon la revendication 7, **caractérisé en ce qu'**il y a une fente (S) axiale entre les modules solaires (7, 8), où les modules solaires (7, 8) sont reliés par au moins deux goupilles (33, 34) distribuées sur leurs périphéries, lesquelles sont montées avec un jeu axial sur au moins un des deux modules solaires (7, 8).

9. Dispositif d'alimentation en énergie solaire selon la revendication 8, **caractérisé en ce que** chaque goupille (33, 34) peut être verrouillée solidement à l'un module solaire (7) et de manière amovible avec un jeu axial avec une tête (37) élargie dans une rainure en baïonnette (35, 36) de l'autre module solaire (8).

10. Dispositif d'alimentation en énergie solaire selon l'une des revendications 1 à 9, **caractérisé en ce que** chaque module solaire (7, 8) présente un corps (24) transparent en forme de tube avec des éléments photovoltaïques (25) sur son côté intérieur, où le corps (24) est maintenu entre deux anneaux frontaux (26, 27) qui sont reliés ensemble par le biais de barres (29) s'étendant à l'intérieur du module solaire (7, 8) .

11. Dispositif d'alimentation en énergie solaire selon l'une des revendications 1 à 10, **caractérisé en ce que** la couronne (4) porte également un anneau frontal (13) à son extrémité inférieure.

12. Dispositif d'alimentation en énergie solaire selon la revendication 10 en combinaison avec la revendication 8 ou selon la revendication 11 en combinaison avec la revendication 5, **caractérisé en ce que** les goupilles (33, 34) sont montées sur l'anneau frontal (13, 26, 27) respectif.

13. Dispositif d'alimentation en énergie solaire selon l'une des revendications 1 à 12, **caractérisé en ce que** la couronne (4) a un épaulement intérieur (10) permettant l'appui sur le côté supérieur de la pointe de mât (3) et est orientable coaxialement par rapport au mât (2) au moyen de vis d'ajustement (12) distribuées sur son périmètre intérieur pouvant être amenées en appui contre la pointe de mât (3).

14. Dispositif d'alimentation en énergie solaire selon l'une des revendications 1 à 13, **caractérisé en ce que** la couronne (4) porte au moins un bras en porte à faux (5), de préférence deux bras en porte à faux (5) diamétraux, pour le montage de respectivement un éclairage (6).

15. Dispositif d'alimentation en énergie solaire selon la revendication 14, **caractérisé en ce que** chaque bras (5) est logé, réglable en angle, sur la couronne (4).

16. Dispositif d'éclairage (1) avec un mât et un dispositif d'alimentation en énergie solaire selon l'une des revendications 1 à 15, dont la couronne (4) est posée sur la pointe de mât (3) et le mât (2) traverse ses éléments de ressort (31, 32) écartés, ainsi qu'au moins un éclairage (6) porté par le dispositif d'alimentation en énergie solaire et alimenté électriquement par celui-ci.
